# EUROPÄISCHE PATENTANMELDUNG

(11) **EP 0 605 745 A1**
(43) Veröffentlichungstag der Anmeldung: **13.07.1994**
(21) Anmeldenummer: 92810920.6
(22) Anmeldetag: 26.11.1992
(51) Int. Cl.: B01D 53/34

(54) **Einrichtung zum thermischen Entsticken von Rauchgas**

(71) Anmelder: ABB Management AG, CH-5401 Baden (CH)
(72) Erfinder: Sauter, Josef, CH-8583 Sulgen (CH)

(57) **Zusammenfassung**

Das Rauchgas durchströmt einen Reaktionsraum (20, 20') in axialer Richtung (Pfeil A). In der Strömungsrichtung sind hintereinander mehrere Gruppen von Düsen (15 bis 18; 15' bis 18') angeordnet, über die Ammoniak mittels eines Tragmediums in das Rauchgas eingebracht wird. Jede Gruppe weist mindestens zwei über den Umfang des Reaktionsraumes im wesentlichen gleichmässig verteilte Düsen auf, die in einer gemeinsamen, sich quer zur Strömungsrichtung des Rauchgases erstreckenden Ebene vorgesehen sind. Die Düsen sind so angeordnet, dass das aus ihnen austretende Tragmedium eine Drehströmung um die Strömungsachse des Rauchgases erzeugt, wobei die Drehströmung der Düsen (15; 15') einer Gruppe zur Drehströmung der Düsen (16; 16') der benachbarten Gruppe entgegengesetzt ist.

## Beschreibung

Die Erfindung betrifft eine Einrichtung zum thermischen Entsticken von einer Feuerung entstammendem Rauchgas, das einen Reaktionsraum durchströmt, mit Hilfe von auf Stickoxide reduzierend wirkenden Chemikalien, die mittels eines Tragmediums über Düsen in den Rauchgasstrom eingebracht wird. Als reduzierend wirkende Chemikalien kommen Ammoniak NH₃ und Amine, z.B. Harnstoff CO(NH₂)₂, in Frage. Bei der thermischen Entstickung werden durch chemische Reaktion die Stickoxyde NO und/oder NO₂ in Stickstoff N₂ und Wasser H₂O umgewandelt. Diese Reaktion spielt sich nur bei hohen Temperaturen ab, und zwar innerhalb des Temperaturbereiches von etwa 800 bis 1100°C. Als Tragmedium für das Ammoniak kommen Luft, Dampf, Rauchgas oder auch Wasser in Frage. Das Einbringen des Ammoniaks geschieht bisher durch eine Düse, die im Zentrum des Rauchgasstroms angeordnet ist und deren Eindüsrichtung im wesentlichen mit der Strömungsrichtung des Rauchgases zusammenfällt. Es sind auch schon mehrere Düsen verwendet worden, die in einer Ebene quer zur Strömungsrichtung des Rauchgases angeordnet sind und entweder über den Querschnitt des Rauchgasstromes verteilt oder am Rande des Reaktionsraumes angeordnet sind. Im letztgenannten Fall bildet der Reaktionsraum zugleich eine Brennkammer und die Düsen befinden sich dann in einander gegenüberliegenden Wänden der Brennkammer. Es hat sich gezeigt, dass bei den bisherigen Düsenanordnungen die Verteilung des Ammoniaks im Rauchgasstrom nicht voll befriedigend ist, indem zuviel Ammoniak zugegeben werden muss und zuviel Ammoniak den Reaktionsraum verlässt, das nicht an der chemischen Reaktion beteiligt war.

Der Erfindung liegt die Aufgabe zugrunde, bei einer Einrichtung der eingangs genannten Art die Reaktionsbedingungen erheblich zu verbessern, so dass weniger unreagiertes Ammoniak aus dem Reaktionsraum austritt.

Diese Aufgabe wird erfindungsgemäss dadurch gelöst, dass in Strömungsrichtung des Rauchgases hintereinander mindestens zwei Gruppen von Düsen angeordnet sind, dass jede Gruppe mindestens zwei über den Umfang des Reaktionsraumes im wesentlichen gleichmässig verteilte Düsen aufweist, die in einer gemeinsamen, sich quer zur Strömungsrichtung des Rauchgases erstreckenden Ebene vorgesehen sind, dass die Düsen so angeordnet sind, dass das aus ihnen austretende Tragmedium eine Drehströmung um die Strömungsachse des Rauchgases erzeugt, und dass die Drehströmung der Düsen einer Gruppe zur Drehströmung der Düsen der benachbarten Gruppe entgegengesetzt ist.

Durch die gruppenweise Anordnung der Düsen in mindestens zwei Ebenen, in denen zueinander entgegengesetzte Drehströmungen des Tragmediums erzeugt werden, treten intensive Verwirbelungen zwischen dem Rauchgas einerseits und dem Gemisch aus Tragmedium und Ammoniak andererseits auf, die zu einer guten Durchmischung der Reaktionspartner führen, was zu besseren Reaktionsbedingungen führt.

Ein Ausführungsbeispiel der Erfindung ist in der folgenden Beschreibung anhand der Zeichnung näher erläutert. Es zeigen jeweils schematisch:
- Fig.1: eine Anlage mit einer erfindungsgemässen Entstickungseinrichtung,
- Fig.2: einen Horizontal schnitt entsprechend der Linie II - II in Fig.1 und
- Fig.3: einen Horizontal schnitt entsprechend der Linie III - III in Fig.1.

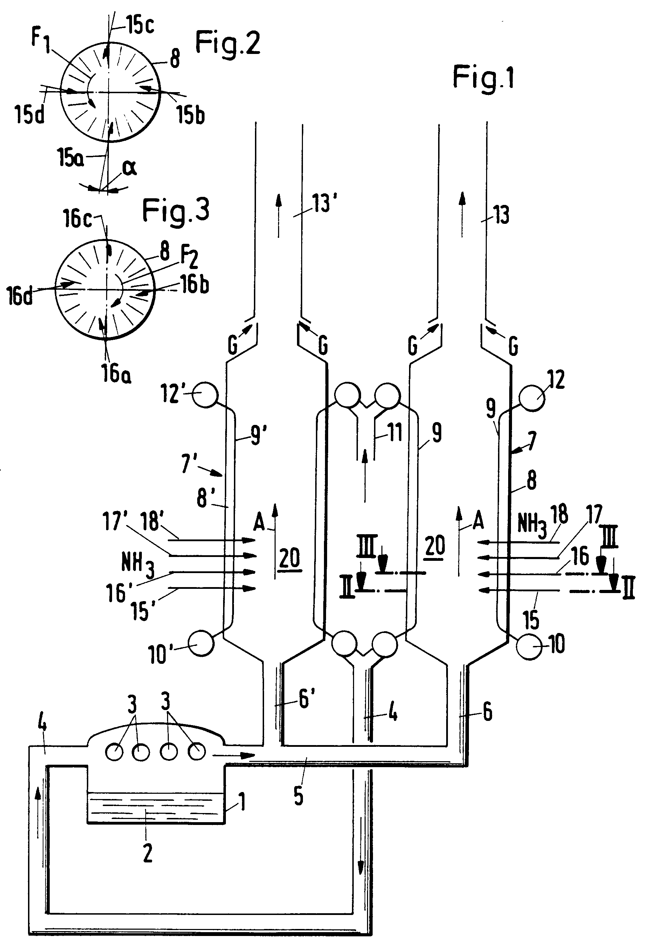

Gemäss Fig.1 weist die Anlage einen Ofen 1 auf, der in seinem unteren Teil eine Glasschmelze 2 enthält und in seinem oberen Teil mit einer Feuerung versehen ist, die durch vier Brenneröffnungen 3 angedeutet ist. Der Feuerung wird in nicht näher dargestellter Weise Brennstoff zugeführt, z.B. Schweröl, der oberhalb der Glasschmelze 2 verbrannt wird, wobei die Wärme zum grossen Teil an die Glasschmelze abgegeben wird. Im oberen Bereich des Ofens 1 ist eine Luftzufuhrleitung 4 angeschlossen, in der vorgewärmte Verbrennungsluft zum Ofen 1 strömt. Im oberen Bereich des Ofens 1 ist ausserdem eine Rauchgasleitung 5 angeschlossen, die sich in zwei Zweigleitungen 6 und 6' aufteilt, die ihrerseits zu je einem Wärmeübertrager oder Rekuperator 7 bzw. 7' führen. Jeder Wärmeübertrager besteht aus einem Behälter 8 bzw. 8' mit vertikaler Achse und rundem Querschnitt. Die vertikalen Wände jedes Behälters sind mit vertikalen Rohren 9 bzw. 9' belegt. Die oberen Enden dieser Rohre gehen von ausserhalb des Behälters liegenden Ringverteilern 12 bzw. 12' aus, die an eine gemeinsame Zufuhrleitung 11 angeschlossen sind. Die unteren Enden der Rohre 9 und 9' münden in ausserhalb des Behälters liegende Ringsammler 10 bzw. 10', die mit der Luftzufuhrleitung 4 des Ofens 1 in Verbindung stehen. Am oberen Ende der Behälter 8 und 8' ist je eine Abgasleitung 13 bzw. 13' angeschlossen, die zu einem nicht dargestellten gemeinsamen Kamin führt.

In der unteren Hälfte jedes Behälters 8 und 8' ist eine Zufuhr von Ammoniak NH₃ vorgesehen, die durch vier Pfeile 15 bis 18 bzw. 15' bis 18' angedeutet ist. Die jeweils vier horizontalen Pfeile sollen zeigen, dass das Ammoniak in vier verschiedenen Ebenen zugeführt wird, die in Strömungsrichtung des Rauchgases (Pfeil A) hintereinander liegen. Jeder Behälter 8 bzw. 8' umschliesst also einen Reaktionsraum 20 bzw. 20'.

Wie Fig.2 zeigt, sind in der untersten Zufuhrebene vier Düsen 15a, b, c, und d vorgesehen, und zwar über den Umfang des Behälters 8 im wesentlichen gleichmässig verteilt. Die Düsen 15a bis 15d sind alle unter dem selben Winkel α von 10° (Eindüsrichtung) zur jeweiligen Radialebene am Behälterumfang angeordnet, so dass sich im Behälter 8 eine Drehströmung (Pfeil F₁) im Gegenuhrzeigersinn ergibt. In der darüberliegenden Zufuhrebene sind - wie Fig.3 zeigt - die Düsen 16a bis 16d ebenfalls unter einem Winkel α von 10° am Behälterumfang angeordnet, jedoch in der anderen Richtung zur jeweiligen Radialabene geneigt. Daraus resultiert gemäss Fig.3 eine Drehströmung (Pfeil F₂) im Behälter 8 im Uhrzeigersinn. In der nächsten Zufuhrebene - in Fig.1 die dritte von unten - sind vier Düsen 17 entsprechend den Düsen 15a bis 15d in Fig.2 angeordnet, wogegen die Düsen 18 in der in Fig.1 obersten Zufuhrebene entsprechend den Düsen 16a bis 16d in Fig.3 angeordnet sind. Damit ergeben sich also jeweils in zwei einander benachbarten Zufuhrebenen entgegengesetzte Drehströmungen. Die Düsenanordnung für die Ammoniakzufuhr 15' bis 18' zum Behälter 8' ist gleich wie für den Behälter 8 beschrieben.

Die beschriebene Anlage funktioniert wie folgt: Das Rauchgas aus dem Ofen 1 strömt mit einer Temperatur von ca. 1300°C in die Rauchgasleitung 5 und verteilt sich über die Zweigleitungen 6 und 6' auf die beiden Rekuperatoren 7 und 7'. Das Rauchgas kühlt sich bis zum Erreichen der Reaktionszone 20 bzw. 20' noch etwas ab, z.B. auf eine Temperatur von ca. 1100°C, und zwar unter der Wirkung der Vorwärmung der Luft in den Rohren 9 und 9'. Es enthält Stickoxyde NOₓ, die im Reaktionsraum 20 bzw. 20' unter der Einwirkung des Ammoniaks in N₂ und H₂O umgewandelt werden. Das Ammoniak wird mit Hilfe von Tragluft, in der es fein verteilt ist, in den beiden untersten Ebenen mittels der Düsen 15a bis 15d bzw. 16a bis 16d (Fig.2 und 3) eingedüst, wobei sich wegen der entgegengesetzten Drehströmungen (Pfeile F₁ und F₂) eine Verwirbelung und damit gute Durchmischung von Rauchgas einerseits und Ammoniak und Tragluft andererseits einstellt. Die beiden oberen Zufuhrebenen können dabei ausser Betrieb sein, da die über die beiden unteren Ebenen zugeführte Ammoniakmenge normalerweise ausreicht.

Im vorliegenden Beispiel sind vier Zufuhrebenen vorgesehen, um den Zufuhrort für das Ammoniak temperaturabhängig variieren zu können, d.h. dass je nach Temperatur des eintretenden Rauchgases die eigentliche Reaktionszone sich etwas verschieben kann. Wegen der thermischen Entstickung, auch als selektive nichtkatalytische Reduktion (SNCR-Verfahren) bezeichnet, kann sich die Lage der optimalen Stickoxydreduktion etwas verschieben, so dass die Ammoniakzufuhr auf die obersten zwei Ebenen 17, 18 bzw. 17', 18' verlagert wird oder auch auf die zwei mittleren Ebenen 16, 17, bzw. 16', 18'. Es sind also immer mindestens zwei Zufuhrebenen gleichzeitig im Betrieb. Das in der Reaktionszone 20 bzw. 20' entstickte Gas verlässt den Rekuperatur 7 bzw.7' mit einer Temperatur von etwa 700°C und gelangt dann in die Abgasleitung 13 bzw. 13', in der es durch Zutritt von Umgebungsluft (Pfeile G) auf eine Temperatur von 300°C abgekühlt wird. Die dem Ofen 1 über die Zufuhrleitung 4 zugeführte Verbrennungsluft wird über die Leitung 11 aus der Umgebung mit einer Temperatur von etwa 20° angesaugt und beim Durchströmen der Rohre 9 und 9' auf eine Temperatur von etwa 600°C vorgewärmt.

Abweichend von dem beschriebenen Ausführungsbeispiel kann der Querschnitt der Reaktionsräume 20 und 20' bzw. der Behälter 8 und 8' statt rund auch quadratisch oder vieleckig sein. Weiter ist es möglich, jeweils für eine Gruppe von Düsen die Eindüswinkel verschieden gross zu bemessen, und zwar in dem Bereich von 5° bis 45°.

## Patentansprüche

1. Einrichtung zum thermischen Entsticken von einer Feuerung entstammendem Rauchgas, das einen Reaktionsraum durchströmt, mit Hilfe von auf Stickoxide reduzierend wirkenden Chemikalien, die mittels eines Tragmediums über Düsen in den Rauchgasstrom eingebracht wird, dadurch gekennzeichnet, dass in Strömungsrichtung des Rauchgases hintereinander mindestens zwei Gruppen von Düsen angeordnet sind, dass jede Gruppe mindestens zwei über den Umfang des Reaktionsraumes im wesentlichen gleichmässig verteilte Düsen aufweist, die in einer gemeinsamen, sich quer zur Strömungsrichtung des Rauchgases erstreckenden Ebene vorgesehen sind, dass die Düsen so angeordnet sind, dass das aus ihnen austretende Tragmedium eine Drehströmung um die Strömungsachse des Rauchgases erzeugt, und dass die Drehströmung der Düsen einer Gruppe zur Drehströmung der Düsen der benachbarten Gruppe entgegengesetzt ist.

2. Einrichtung nach Anspruch 1, dadurch gekennzeichnet, dass der Reaktionsraum vieleckigen Querschnitt aufweist.

3. Einrichtung nach Anspruch 1, dadurch gekennzeichnet, dass der Reaktionsraum runden Querschnitt aufweist.

4. Einrichtung nach Anspruch 3, dadurch gekennzeichnet, dass die Eindüsrichtung der Düsen jeweils einer Gruppe unter einem Winkel zwischen 5° und 45°, vorzugsweise zwischen 7,5 und 15°, zur radialen Richtung liegt.

5. Einrichtung nach Anspruch 4, dadurch gekennzeichnet, dass der Winkel der Eindüsrichtung in einer Gruppe gleich gross ist wie der Winkel der Eindüsrichtung in der benachbarten Gruppe.

6. Einrichtung nach Anspruch 4 oder 5, dadurch gekennzeichnet, dass innerhalb einer Düsengruppe der Winkel der Eindüsrichtung für alle Düsen im wesentlichen gleich ist.

7. Einrichtung nach einem der Ansprüche 1 bis 6, dadurch gekennzeichnet, dass der Reaktionsraum als Wärmeübertrager ausgebildet ist, indem seine Wände mit in Strömungsrichtung des Rauchgases angeordneten Rohren belegt sind.

8. Einrichtung nach Anspruch 7, dadurch gekennzeichnet, dass die Rohre von Luft durchströmt sind, die nach Verlassen des Wärmeübertragers als Verbrennungsluft der Feuerung zugeführt wird.
